# DEMANDE DE BREVET EUROPEEN

(11) **EP 1 902 795 A1**
(43) Date de publication de la demande: **26.03.2008**
(21) Numéro de dépôt: 07116592.2
(22) Date de dépôt: 17.09.2007
(51) Int. Cl.: B22D 19/00, F02F 7/00, F16C 19/00, F16C 9/02

(54) **Moteur de véhicule à vilebrequin sur roulements**

(30) Priorité: 21.09.2006 FR 0653872
(71) Demandeur: PEUGEOT CITROËN AUTOMOBILES S.A., 78140 Vélizy Villacoublay (FR)
(72) Inventeur: Hocine, Ali, 92400 Courbevoie (FR)
(74) Mandataire: Allain, Laurent

(57) **Abrégé**

Ce moteur comprend un carter (13), un vilebrequin monté rotatif dans le carter (13), le carter (13) comprenant une première partie (28) et une seconde partie (30) entre lesquelles est retenu le vilebrequin, et un roulement (32) interposé entre le carter (13) et le vilebrequin, le roulement (32) comportant une bague de roulement (34) fixe par rapport au carter (13) et une pluralité d'organes de roulement (36) interposés entre le vilebrequin et la bague de roulement (34), la bague de roulement (34) comprenant deux inserts (38, 40) formant deux demi-bagues, chaque insert (38, 40) étant associé à une partie du carter (28, 30).

Chaque insert (38, 40) et chaque partie associée (28, 30) du carter (13) sont assemblés à la coulée.

## Description

La présente invention concerne un moteur, du type comprenant un carter, un vilebrequin monté rotatif dans le carter, le carter comprenant une première partie et une seconde partie entre lesquelles est retenu le vilebrequin, et un roulement interposé entre le carter et le vilebrequin, le roulement comportant une bague de roulement fixe par rapport au carter et une pluralité d'organes de roulement interposés entre le vilebrequin et la bague de roulement, la bague de roulement comprenant deux inserts formant deux demi-bagues, chaque insert étant associé à une partie du carter.

Le moteur ayant un vilebrequin monté sur roulements est une solution efficace pour réduire la consommation de carburant via une diminution des frottements entre des paliers supports de vilebrequin et les tourillons du vilebrequin.

Dans ce type de moteur, les sollicitations mécaniques élevées provoquées par les organes de roulement nécessitent un niveau de dureté des bagues de roulement plus élevé que pour les moteurs classiques dans lesquels des coussinets sont prévus.

Il faut donc utiliser des bagues de roulement spécifiques en acier traité, le plus souvent par induction, qui sont rapportées en force dans le carter, en général en aluminium, après coulée de celui-ci.

Cependant, outre la complexité du montage d'un tel moteur en chaîne d'assemblage et le coût élevé de ces bagues de roulement, il existe un risque important d'augmentation du niveau de bruit.

En effet, lorsque le moteur fonctionne, les matériaux du carter et des bagues de roulement étant différents, les dilatations différentielles peuvent engendrer une augmentation du jeu entre ces pièces, et donc une augmentation du bruit.

De plus, quand la température du moteur augmente, puisque le jeu entre le carter et les bagues de roulement augmente, les bagues peuvent se défretter et se chevaucher, entraînant de ce fait la casse du moteur.

L'invention a pour but de remédier à ces inconvénients en proposant un système simple et peu coûteux qui permette non seulement de limiter le bruit engendré par le moteur mais également de garantir une tenue mécanique correcte de ce dernier en limitant les risques de jeu entre le carter et les bagues de roulement.

A cet effet, l'invention a pour objet un moteur, du type précité, caractérisé en ce que chaque insert et chaque partie associée du carter sont assemblés à la coulée.

Le moteur selon l'invention peut comporter une ou plusieurs des caractéristiques suivantes :
- chaque partie du carter est coulée autour d'un insert ;
- chaque insert est coulé dans une partie du carter ;
- chaque insert et chaque partie associée du carter présentent des profils d'accrochage complémentaires en saillie et en creux;
- chaque insert présente un chemin de roulement propre à guider les organes de roulement ;
- chaque insert est réalisé en acier ;
- l'acier est traité par induction ou par carbonitruration ; et
- le carter comprend de l'aluminium.

L'invention a également pour objet un procédé de fabrication d'un moteur comprenant un carter, un vilebrequin monté rotatif dans le carter, le carter comprenant une première partie et une seconde partie entre lesquelles est retenu le vilebrequin, et un roulement interposé entre le carter et le vilebrequin, le roulement comportant une bague de roulement fixe par rapport au carter et une pluralité d'organes de roulement interposés entre le vilebrequin et la bague de roulement, la bague de roulement comprenant deux inserts formant deux demi-bagues, chaque insert étant associé à une partie du carter, le procédé comportant les étapes successives suivantes :
- former les deux inserts formant deux demi-bagues de roulement destinées à recevoir les organes de roulement ;
- couler les deux parties complémentaires du carter, chacune autour d'un insert ;
- monter les organes de roulement autour du vilebrequin ; et
- monter les inserts et les parties associées du carter autour des organes de roulement.

L'invention a également pour objet un procédé de fabrication d'un moteur comprenant un carter, un vilebrequin monté rotatif dans le carter, le carter comprenant une première partie et une seconde partie entre lesquelles est retenu le vilebrequin, et un roulement interposé entre le carter et le vilebrequin, le roulement comportant une bague de roulement fixe par rapport au carter et une pluralité d'organes de roulement interposés entre le vilebrequin et la bague de roulement, la bague de roulement comprenant deux inserts formant deux demi-bagues, chaque insert étant associé à une partie du carter, le procédé comportant les étapes successives suivantes :
- former les deux parties complémentaires du carter ;
- couler les deux inserts formant deux demi-bagues de roulement destinées à recevoir les organes de roulement, chacun dans une partie du carter ;
- monter les organes de roulement autour du vilebrequin ; et
- monter les inserts et les parties associées du carter autour des organes de roulement.

L'invention sera mieux comprise à la lecture de la description qui va suivre, donnée uniquement à titre d'exemple et faite en se référant aux dessins annexés, sur lesquels :
- la Figure 1 est une vue schématique en coupe verticale d'un moteur selon l'invention ; et
- la Figure 2 est une vue en coupe transversale verticale selon la ligne II-II de la Figure 1.

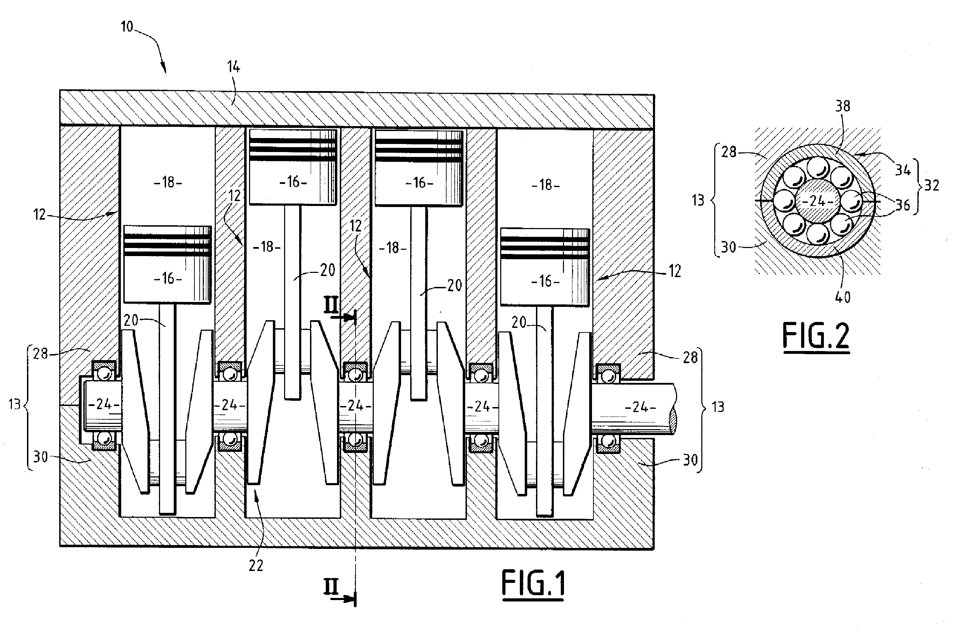

La Figure 1 représente, de façon schématique, un moteur 10 équipé de quatre cylindres 12.

Le bloc moteur 10 comporte un carter 13 en aluminium et une culasse 14. Le carter 13 délimite les quatre cylindres 12 dans chacun desquels est monté coulissant un piston 16. Une chambre de combustion 18 est ainsi délimitée entre la culasse 14 et chaque piston 16 dans les cylindres 12.

Les quatre pistons 16 sont raccordés, par l'intermédiaire d'une bielle 20, à un vilebrequin 22.

Le vilebrequin 22 comporte cinq tourillons 24, au niveau desquels le vilebrequin 22 est monté rotatif dans le carter 13.

Le carter 13 est constitué d'une première partie 28, appelée carter cylindre et délimitant les cylindres 12, et d'une deuxième partie 30 appelée carter chapeau, entre lesquelles est retenu le vilebrequin 22.

La Figure 2 est une vue en coupe transversale qui illustre de manière plus détaillée la liaison entre un des tourillons 24 du vilebrequin 22 et le carter 13.

Un roulement 32 est interposé entre le tourillon 24 et le carter 13.

Le roulement 32 comprend une bague de roulement extérieure 34 fixe par rapport au carter 13, et une pluralité d'organes de roulement 36 agencés dans une cage (non représentée) en plastique ou en acier, et interposés entre le tourillon 24 et la bague 34.

La bague de roulement 34 est constituée de deux inserts 38, 40 formant deux demi-bagues de roulement.

Le premier insert 38 est solidaire du carter cylindre 28, tandis que le deuxième insert 40 est solidaire du carter chapeau 30.

Chaque insert 38, 40 présente un chemin de roulement destiné à guider les organes de roulement 36.

Les deux inserts 38, 40 sont réalisés en acier traité par induction ou par carbonitruration pour obtenir le niveau de dureté nécessaire requis par les sollicitations mécaniques des organes de roulement 36.

Le tourillon 24, en fonte et/ou en aluminium, est également traité pour avoir une dureté élevée.

Lors de la fabrication du moteur 10, les deux inserts 38, 40 sont usinés puis traités. Le carter cylindre 28 et le carter chapeau 30 sont coulés ensuite respectivement autour des premiers inserts 38 et des deuxièmes inserts 40. Les organes de roulement 36 sont alors montés autour des tourillons 24 du vilebrequin 22. Et enfin, les inserts 38, 40 assemblés aux parties 28, 30 du carter 13 sont montés autour des organes de roulement 36.

En variante, ce sont les deux parties complémentaires 28, 30 du carter 13 qui sont d'abord formées. Les premiers et deuxièmes inserts 38, 40 sont coulés ensuite respectivement dans le carter cylindre 28 et le carter chapeau 30. Les organes de roulement 36 sont alors montés autour des tourillons 24 du vilebrequin 22. Et enfin, les inserts 38, 40 assemblés aux parties 28, 30 du carter 13 sont montés autour des organes de roulement 36.

Pour renforcer la fixation entre les inserts 38, 40 et les parties du carter associées 28, 30, des profils d'accrochage complémentaires (non représentés) en saillie et en creux sont prévus sur chacune des pièces.

Le système selon l'invention, simple à monter en chaîne d'assemblage du moteur et peu coûteux, permet donc de limiter le niveau de bruit du moteur et de maintenir la tenue mécanique de ce dernier en limitant les risques de jeu entre le carter et les inserts.

De plus, l'espace initialement prévu pour la bague de roulement est désormais disponible. Cet espace est comblé, en particulier, par l'utilisation d'organes de roulement de volume plus important, donc d'usure plus lente.

Ceci contribue à renforcer la tenue mécanique du moteur, lui garantissant ainsi une durée de vie plus longue.

## Revendications

1. Moteur (10), du type comprenant un carter (13), un vilebrequin (22) monté rotatif dans le carter (13), le carter (13) comprenant une première partie (28) et une seconde partie (30) entre lesquelles est retenu le vilebrequin (22), et un roulement (32) interposé entre le carter (13) et le vilebrequin (22), le roulement (32) comportant une bague de roulement (34) fixe par rapport au carter (13) et une pluralité d'organes de roulement (36) interposés entre le vilebrequin (22) et la bague de roulement (34), la bague de roulement (34) comprenant deux inserts (38, 40) formant deux demi-bagues, chaque insert (38, 40) étant associé à une partie du carter (28, 30), **caractérisé en ce que** chaque insert (38, 40) et chaque partie associée (28, 30) du carter (13) sont assemblés à la coulée.

2. Moteur (10) selon la revendication 1, **caractérisé en ce que** chaque partie (28, 30) du carter (13) est coulée autour d'un insert (38, 40).

3. Moteur (10) selon la revendication 1, **caractérisé en ce que** chaque insert (38, 40) est coulé dans une partie (28, 30) du carter (13).

4. Moteur (10) selon l'une quelconque des revendications 1 à 3, **caractérisé en ce que** chaque insert (38, 40) et chaque partie associée (28, 30) du carter (13) présentent des profils d'accrochage complémentaires en saillie et en creux.

5. Moteur (10) selon l'une quelconque des revendications 1 à 4, **caractérisé en ce que** chaque insert (38, 40) présente un chemin de roulement propre à guider les organes de roulement (36).

6. Moteur (10) selon l'une quelconque des revendications 1 à 5, **caractérisé en ce que** chaque insert (38, 40) est réalisé en acier.

7. Moteur (10) selon la revendication 6, **caractérisé en ce que** l'acier est traité par induction ou par carbonitruration.

8. Moteur (10) selon l'une quelconque des revendications 1 à 7, **caractérisé en ce que** le carter (13) comprend de l'aluminium.

9. Procédé de fabrication d'un moteur (10) comprenant un carter (13), un vilebrequin (22) monté rotatif dans le carter (13), le carter (13) comprenant une première partie (28) et une seconde partie (30) entre lesquelles est retenu le vilebrequin (22), et un roulement (32) interposé entre le carter (13) et le vilebrequin (22), le roulement (32) comportant une bague de roulement (34) fixe par rapport au carter (13) et une pluralité d'organes de roulement (36) interposés entre le vilebrequin (22) et la bague de roulement (34), la bague de roulement (34) comprenant deux inserts (38, 40) formant deux demi-bagues, chaque insert (38, 40) étant associé à une partie du carter (28, 30), le procédé comportant les étapes successives suivantes :
- former les deux inserts (38, 40) formant deux demi-bagues de roulement destinées à recevoir les organes de roulement (36) ;
- couler les deux parties complémentaires (28, 30) du carter (13), chacune autour d'un insert (38, 40) ;
- monter les organes de roulement (36) autour du vilebrequin (22) ; et
- monter les inserts (38, 40) et les parties associées (28, 30) du carter (13) autour des organes de roulement (36).

10. Procédé de fabrication d'un moteur (10) comprenant un carter (13), un vilebrequin (22) monté rotatif dans le carter (13), le carter (13) comprenant une première partie (28) et une seconde partie (30) entre lesquelles est retenu le vilebrequin (22), et un roulement (32) interposé entre le carter (13) et le vilebrequin (22), le roulement (32) comportant une bague de roulement (34) fixe par rapport au carter (13) et une pluralité d'organes de roulement (36) interposés entre le vilebrequin (22) et la bague de roulement (34), la bague de roulement (34) comprenant deux inserts (38, 40) formant deux demi-bagues, chaque insert (38, 40) étant associé à une partie du carter (28, 30), le procédé comportant les étapes successives suivantes :
- former les deux parties complémentaires (28, 30) du carter (13) ;
- couler les deux inserts (38, 40) formant deux demi-bagues de roulement destinées à recevoir les organes de roulement (36), chacun dans une partie (28, 30) du carter (13) ;
- monter les organes de roulement (36) autour du vilebrequin (22) ; et
- monter les inserts (38, 40) et les parties associées (28, 30) du carter (13) autour des organes de roulement (36).
